## Europäisches Patentamt
## European Patent Office
## Office européen des brevets

(11) Numéro de publication: **0 325 511**
A1

(12) **DEMANDE DE BREVET EUROPEEN**

(21) Numéro de dépôt: **89400091.8**

(22) Date de dépôt: **11.01.89**

(51) Int. Cl.⁴: **B 01 J 29/24**
B 01 J 29/26, B 01 D 53/36

(30) Priorité: **19.01.88 FR 8800635**

(43) Date de publication de la demande:
**26.07.89 Bulletin 89/30**

(84) Etats contractants désignés: **BE DE GB IT NL**

(71) Demandeur: **INSTITUT FRANCAIS DU PETROLE**
**4, Avenue de Bois-Préau**
**F-92502 Rueil-Malmaison (FR)**

(72) Inventeur: **Deschamps, André**
**3, Chemin des Princes**
**F-78590 Noisy le Roi (FR)**

**Dezael, Claude**
**60, Avenue Saint Germain**
**F-78600 Maisons Laffite (FR)**

**Roux-Guerraz, Claude**
**52, Rue Claude Decaen**
**F-75012 Paris (FR)**

**Travers, Christine**
**12 Boulevard du Général de Gaulle**
**F-92500 Rueil Malmaison (FR)**

(54) **Procédé et catalyseur pour la réduction sélective des oxydes d'azote.**

(57) Nouvelle composition catalytique zéolithique, comprenant une mordénite à petits pores se présentant sous forme d'aiguilles, échangée avec au moins un métal choisi dans le groupe formé par le cuivre, le vanadium, le tungstène, le fer, le cobalt et le molybdène. Utilisation de cette composition catalytique comme catalyseur pour la réduction des oxydes d'azote par l'ammoniac.

EP 0 325 511 A1

**Description**

## PROCEDE ET CATALYSEUR POUR LA REDUCTION SELECTIVE DES OXYDES D'AZOTE

L'invention concerne une composition catalytique zéolithique et son utilisation notamment dans un procédé de réduction sélective des oxydes d'azote contenus par exemple dans des fumées de combustion.

Les oxydes d'azote et plus particulièrement l'oxyde nitrique sont des gaz polluants qui se forment lors de la combustion de matières carbonées comme le charbon, les produits pétroliers, le gaz naturel, par exemple dans les centrales thermiques.

Des procédés divers ont été proposés pour éliminer ces produits nocifs des gaz de combustion, par exemple par absorption et par réduction sélective en azote et vapeur d'eau. Cette dernière méthode, généralement considérée comme la plus efficace, utilise l'ammoniac comme réducteur spécifique en présence d'un catalyseur.

De très nombreux catalyseurs ont été proposés pour réaliser cette réaction. Un bon résumé de l'état de l'art est présenté dans l'article de J.R. Kiovsky et Coll. Ind. Eng. Chem. Prod. Res. Dev. 1980, 19, 218-225.

Parmi ceux-ci on peut citer :
- les métaux nobles comme le platine supportés sur alumine et silice-alumine,
- les composés du Cu, du Fe, du Cr, du Ni supportés sur alumine,
- les oxydes de V, W, Mo, Ce supportés sur alumine, silice-alumine, oxyde de titane,
- diverses zéolithes naturelles ou synthétiques sous forme protonique ou échangées avec différents cations notamment le Cu.

Les brevets EP 234974 décrivant l'utilisation de mordenites à large pores et EP 141917 mentionnant l'utilisation de tamis moléculaire en céramique donc à structure amorphe illustrent l'arrière plan technologique ainsi que le brevet US 4663 300 contenant une mordenite avec du titane et le résumé Chemical Abstract, vol 87, n°2,11/7/1977, page 325, n° 10890 a, montrant l'utilisation d'une mordénite associée à de l'argile et contenant du fer, du chrome et/ou du vanadium.

La plupart de ces catalyseurs présentent des inconvénients qui limitent leurs performances lorsqu'ils sont utilisés en présence de gaz de combustion. Ces inconvénients sont principalement :
- l'oxydation parasite de dioxyde de soufre en trioxyde de soufre entraînant des problèmes de corrosion des installations,
- un manque de stabilité dans le temps, notamment en présence de dioxyde de soufre,
- l'oxydation d'une partie de l'ammoniac par l'oxygène contenu dans les fumées ce qui entraîne une surconsommation d'ammoniac. Celle-ci est généralement accompagnée de la formation d'oxydes d'azote en particulier d'oxyde nitreux $N_2O$, ce qui empêche d'obtenir des taux d'élimination élevés des oxydes d'azote,
- la difficulté d'obtenir une élimination poussée des oxydes d'azote sans fuite notable d'ammoniac dans la fumée.

Pour remédier à certains de ces inconvénients différentes solutions ont été proposées. Ainsi le brevet US 4 473 535 montre que l'emploi d'un catalyseur à base de mordénite échangée au Cu permet d'obtenir une meilleure conversion du NO qu'un catalyseur à base de platine sur alumine et qu'il n'entraîne pas d'oxydation parasite de $NH_3$ en NO lorsque la température est augmentée. Cependant ce brevet ne donne aucun renseignement sur les autres problèmes mentionnés plus haut, à savoir la fuite en $NH_3$, la formation de $N_2O$, la stabilité en présence de $SO_2$, la formation de $SO_3$. Par ailleurs les exemples donnés se rapportent exclusivement à l'utilisation d'une mordénite Norton HZ 900 du type à larges pores. C'est aussi le cas dans le brevet FR 2197815.

La présente invention est basée sur la découverte qu'un autre type de mordénite, dite à petits pores, échangée par différents cations, présente des avantages par rapport aux catalyseurs connus, dans la mesure où il ne présente pas les inconvénients précédemment cités.

Les catalyseurs utilisés dans la présente invention sont préparés à partir d'une mordénite caractérisée par un rapport atomique Si/Al compris généralement entre 4 et 6 ; sa structure cristalline est constituée d'enchaînements de tétraèdres de base $SiO_4$ et $AlO_4$, générateurs de deux types de canaux : des canaux à ouverture dodécagonale (contour à 12 oxygènes) et des canaux à ouverture octogonale (contour à 8 oxygènes).

Il existe cependant 2 types de mordénite, qui se distinguent par leurs propriétés d'adsorption : la forme à larges pores, toujours synthétique, qui adsorbe les molécules telles que le benzène (diamètre cinétique = 6,6 x $10^{-10}$ m) et la forme à petits pores, naturelle ou synthétique, qui n'adsorbe que des molécules de diamètre cinétique inférieur à 4,4 x $10^{-10}$ m environ. Ces mordénites se distinguent également par des différences morphologiques - aiguilles pour la mordénite petits pores, sphérulites pour la mordénite larges pores -et structurales : présence ou non de défauts. Dans la littérature précitée, c'est la mordénite larges pores qui est utilisée.

Dans la présente invention, on utilise la mordénite à petits pores.

Ces mordénites synthétiques à petits pores peuvent être obtenues par synthèse notamment dans les conditions suivantes : température comprise entre 200 et 300 °C environ, et temps de cristallisation de 5 à 50 heures.

La mordénite utilisée pour la fabrication des catalyseurs de la présente invention est une mordénite petits pores dont la teneur en sodium est comprise généralement entre 4 et 6,5 pour cent (poids) par rapport au poids de mordénite sèche, dont le rapport atomique Si/Al est compris généralement entre 4,5 et 6,5 et le volume de maille généralement compris entre 2,80 et 2,77 nm³. Cette mordénite n'adsorbe que des molécules de diamètre cinétique inférieur à environ 4,4 x 10⁻¹⁰ m.

Pour la préparation des catalyseurs de la présente invention cette mordénite peut être utilisée telle que sous sa forme sodique, ou bien sous forme ammonium, désaluminée ou non. Dans le cas où elle est utilisée sous forme désaluminée la mordénite est caractérisée par différentes spécifications après traitements : un rapport atomique Si/Al compris entre 5 et 100 et de préférence entre 5,5 et 50, une teneur en sodium inférieure à 0,2 % poids et de manière préférée inférieure à 0,1 % par rapport au poids de zéolithe sèche, un volume de maille, V, de la maille élémentaire compris entre 2,78 et 2,73 nm³ et de manière préférée entre 2,77 et 2,74 nm³, une capacité d'adsorption de benzène supérieure à 5 % et de préférence à 8 % par rapport au poids de solide (zéolithe) sec, une morphologie particulière, à savoir qu'elle se présente en majeure partie sous forme d'aiguilles de préférence de longueur moyenne 5 microns (5 x 10⁻⁶ m) dont les faces hexagonales ont une longueur d'environ 1 micron (1 x 10⁻⁶ m) et une "hauteur" d'environ 0,3 micron (0,3 x 10⁻⁶ m).

Il existe diverses méthodes d'obtention d'une mordénite telle que définie ci-dessus à partir d'une mordénite petits pores. Selon une méthode préférée la mordénite petits pores utilisée, est soumise aux différents traitements suivants : les cations sodium sont échangés par des cations ammonium, en plongeant la zéolithe dans une solution d'un sel d'ammonium ionisable de molarité généralement supérieure à 0,5, à une température généralement comprise entre 20 °C et 150 °C. Cet échange peut être répété plusieurs fois. Le produit ainsi obtenu après ces échanges cationiques, peut être lavé puis soumis à un traitement thermique en présence de vapeur d'eau, qui peut être effectué par la technique de calcination en atmosphère confinée (self steaming). La température est comprise entre 300 et 800 °C et de préférence entre 400 et 700 °C, pendant un temps supérieur généralement à 10 minutes et de préférence supérieur à 20 minutes. L'atmosphère de calcination contient au moins 1% et de préférence au moins 5 % de vapeur d'eau. Dans le cas de la calcination en atmosphère confinée, l'atmosphère est constituée essentiellement d'eau et d'ammoniac. Le produit ainsi obtenu peut être soumis à un traitement acide visant à extraire de l'aluminium du solide. Ce traitement peut s'effectuer en plongeant le produit dans un acide minéral ou organique fort de normalité comprise entre 0,1 et 12 N, à une température comprise entre 20 et 150 °C et de préférence entre 80 et 150 °C, pendant un temps supérieur de préférence à 10 minutes. Ce produit ayant subi le traitement acide peut être lavé, par exemple à l'acide, puis lavé à l'eau, puis éventuellement mélangé à toute matrice adéquate.

La mordénite sous forme sodique, sous forme ammonium ou bien sous forme protonique, désaluminée ou non, est ensuite échangée avec un cation choisi parmi les métaux suivants : V, W, Fe, Co, Mo, Cu et de préférence Cu. Cette opération est réalisée par les méthodes conventionnelles dans lesquelles la zéolithe est contactée avec une solution aqueuse contenant les cations métalliques, par exemple une solution aqueuse de nitrate de cuivre. Le taux d'échange peut être aussi bas que 10 % et atteindre jusqu'à 100 % de la capacité d'échange de la mordénite mais on préfère généralement un taux d'échange compris entre 40 et 80 % de celle-ci. La mordénite échangée est séparée de la solution aqueuse, lavée à l'eau distillée et séchée.

La mordénite ainsi préparée peut être mise en forme soit directement sans aucun liant, par pastillage, soit après mélange avec une matrice comportant de la silice, de l'alumine, de la silice-alumine, des argiles naturelles comme le kaolin ou la bentonite, de l'oxyde de titane. Dans ce dernier cas avec matrice la teneur en mordénite du catalyseur ainsi obtenu doit être supérieure à 10 % en poids et de préférence supérieure à 40 % en poids. Le catalyseur peut être mis en forme de poudre, de billes, de pastilles, de plaques ou de monolithes par les techniques connues de l'homme de l'art. On peut aussi déposer une couche de mordénite à la surface d'un support monolithique par enduction avec une dispersion aqueuse de ladite mordénite et d'un liant.

Selon un autre mode de réalisation, l'échange cationique de la mordénite peut être effectué après la mise en forme du catalyseur.

Dans le procédé de l'invention, le courant gazeux contenant des oxydes d'azote, tel qu'une fumée de centrale thermique, de turbine à gaz ou un gaz de queue d'usine acide nitrique, est mélangé avec de l'ammoniac et mis en contact avec le catalyseur.

Le gaz traité renferme généralement en plus de l'azote, 50 à 1000 ppm volume d'oxydes d'azote, de la vapeur d'eau, du dioxyde de carbone et de l'oxygène à une concentration de préférence supérieure à 1 % en volume. Il peut également renfermer du dioxyde de soufre avec une teneur généralement comprise entre 50 et 2000 ppm en volume.

La quantité d'ammoniac injectée dépend de la quantité et de la nature des oxydes d'azote présents dans le gaz traité. Elle est généralement de 0,8 à 1,4 et de préférence 0,9 à 1,1 mole d'ammoniac par mole d'oxydes d'azote.

La vitesse spatiale utilisée dépend de la température et du taux d'élimination des oxydes d'azote recherché. Elle est généralement comprise entre 3000 et 100 000 heure⁻¹ et de préférence entre 5000 et 25000 heure⁻¹.

De manière surprenante il a été découvert que la mordénite "petits pores", telle que définie précédemment, échangée par différents cations, notamment le cuivre, présente différents avantages par rapport à la mordénite "larges pores" pour effectuer l'élimination des oxydes d'azote de fumées industrielles selon la méthode décrite ci-dessus. En présence d'un gaz renfermant du dioxyde de soufre, elle catalyse beaucoup moins l'oxydation du dioxyde de soufre en trioxyde de soufre et présente une activité catalytique vis à vis de la réduction des oxydes d'azote plus stable dans le temps. Par ailleurs, elle permet d'obtenir des taux d'élimination de NO et NO₂ particulièrement élevés sans fuite notable d'ammoniac dans le gaz épuré et sans émission de N₂O.

Le traitement est généralement effectué à une température de 200 à 450°C, de préférence 250 à 350°C.

Lorsque le gaz traité renferme du dioxyde de soufre il est généralement nécessaire d'opérer à une température supérieure à 300 °C et de préférence supérieure à 330 °C pour éviter le dépôt de sulfate d'ammonium sur le catalyseur qui entraîne une diminution de l'activité catalytique par bouchage de la porosité.

Dans le cas d'un gaz ne renfermant pas de dioxyde de soufre, comme par exemple un gaz de combustion de gaz naturel, il est possible d'opérer à plus basse température, par exemple à 250 °C. On a constaté que dans ces conditions et en présence d'un gaz renfermant de la vapeur d'eau, les catalyseurs à base de mordénite à petits pores et partiellement désaluminée présentant un rapport atomique Si/Al compris entre 8 et 50 et de préférence entre 10 et 20 présentent une activité d'élimination des oxydes d'azote supérieure à celle des catalyseurs à base de mordénite non désaluminée.

Les exemples comparatifs suivants, donnés à titre non limitatif, illustrent l'invention.

### EXEMPLE 1 (comparatif)

On prépare un catalyseur A à partir d'une mordénite "larges pores" HZ 900 (zeolon 900 H de NORTON CHEMICAL CORPORATION) disponible dans le commerce sous forme hydrogène. La mordénite est plongée dans une solution aqueuse 2M de nitrate de cuivre (100 $cm^3$ de solution pour 20 g de mordénite) pendant 2 heures à 20 °C. L'échange est répété deux fois, puis la mordénite échangée est lavée, séchée et enfin calcinée à 550 °C pendant 2 heures à l'air.

On obtient ainsi une mordénite dont la teneur en Cu est de 7 % en poids ce qui correspond à un taux d'échange des sites échangeables voisin de 93 %.

Le produit est mis en forme de pastilles de 2 mm de diamètre et 2 mm d'épaisseur.

### EXEMPLE 2

On prépare un catalyseur B à partir d'une mordénite petits pores, référence Alite 150 de la Société Chimique de la Grande Paroisse, sous forme sodée. Sa formule chimique à l'état anhydre est Na $AlO_2$ $(SiO_2)_{5,5}$ et sa capacité d'adsorption de benzène est de 1 % en poids par rapport au poids de solide sec (volume de maille : 2,79 $nm^3$ ; teneur en sodium 5,3 % en poids, diamètre cinétique des molécules adsorbées inférieur à 3,8 x $10^{-10}$ m).

On a préparé la forme échangée sur Cu et on la met en forme selon la procédure de l'exemple 1. On obtient ainsi une mordénite renfermant 6,8 % en poids de cuivre, correspondant à un taux d'échange des sites échangeables de 90 %.

### EXEMPLE 3

On prépare un catalyseur C à partir de la même mordénite petits pores Alite 150 qu'à l'exemple 2 mais en passant par la forme ammonium. Pour cela on traite la mordénite sous forme sodée avec une solution 2M de nitrate d'ammonium à 95 °C pendant deux heures. Le volume de solution engagé est de 100 $cm^3$ pour 25 g de zéolithe sèche. Cette opération est répétée trois fois, puis le produit est lavé à l'eau, et séché. On obtient ainsi une mordénite sous forme ammonium dont la teneur en sodium n'est plus que de 0,1 % en poids.

La mordénite est alors échangée au cuivre et mise en forme comme dans l'exemple 1. On obtient ainsi une mordénité renfermant 7,1 % en poids de cuivre correspondant à un taux d'échange des sites échangeables de 94 %.

### EXEMPLE 4

On prépare un catalyseur D à partir de la mordénité petits pores Alite 150 en utilisant la même procédure qu'à l'exemple 3 mais l'échange au Cu est moins poussé de manière à obtenir une mordénite renfermant 5,1 % en poids de cuivre ce qui correspond à un taux d'échange des sites échangeables de 68 %.

### EXEMPLE 5

On prépare un catalyseur E à partir de la mordénite petits pores Alite 150 mais en la soumettant au préalable à un traitement de désalumination. Pour cela on traite la mordénite sous forme sodée avec une solution 2M de nitrate d' ammonium à 95 °C pendant deux heures. Le volume de solution engagé est de 100 $cm^3$ pour 25 g de zéolithe sèche. Cette opération est répétée trois fois, puis le produit est lavé à l'eau, et soumis à une calcination en atmosphère confinée (self steaming) à 600 °C pendant 2 heures. On obtient ainsi une mordénite sous forme hydrogène dont la teneur en sodium est d'environ 0,1 % en poids, et dont le rapport atomique Si/Al de charpente est égal à 12.

On procède à la préparation de la forme échangée au Cu et à la mise sous forme de pastilles comme dans l'exemple 1. On obtient finalement une mordénite dont la teneur en Cu est de 3,1 % en poids ce qui correspond à un taux d'échange des sites échangeables d'environ 80 %.

### EXEMPLE 6

On prépare un catalyseur F à partir de la mordénite petits pores Alite 150 en appliquant la même procédure que dans l'exemple 5 jusqu'à l'étape de calcination à 600 °C incluse. On procède ensuite à une attaque acide avec de l'acide nitrique 1,3 N en chauffant le produit à reflux dans la solution nitrique pendant 2 heures (200 $cm^3$ de solution pour 25 g de zéolithe). Le produit est ensuite filtré, lavé à l'acide nitrique 0,1 N, puis à l'eau. On obtient ainsi une mordénite sous forme hydrogène dont la teneur en sodium est de 0,03 %, le rapport atomique de charpente Si/Al de 12, débarrassée de l'alumine extra réseau.

La mordénite est alors échangée au cuivre et mise en forme comme dans l'exemple 1. On obtient finalement une mordénite dont la teneur en Cu est de 2,9 % en poids ce qui correspond à un taux d'échange des sites échangeables d'environ 74 %.

EXEMPLE 7

On prépare un catalyseur G selon la procédure de l'exemple 3, mais au lieu d'échanger la mordénite avec une solution de nitrate de cuivre, on l'échange avec une solution de nitrate ferreux. On obtient finalement une mordénite renfermant 5,3 % de fer ce qui correspond à un taux d'échange des sites échangeables d'environ 80 %.

EXEMPLE 8 (comparatif avec exemple 7)

On prépare un catalyseur H selon la procédure de l'exemple 1 mais au lieu d'échanger la mordénite large pores HZ 900 avec une solution de nitrate de cuivre, on l'échange avec une solution de nitrate ferreux On obtient une mordénite renfermant 5,5 % de fer.

EXEMPLE 9

Les catalyseurs décrits dans les exemples 1 à 8 sont testés dans les conditions suivantes:

On place 20 g de catalyseur dans un réacteur en quartz de 2 cm de diamètre, chauffé par un four électrique. Au sommet du réacteur on envoie avec un débit de 300 Nl/h un mélange gazeux renfermant de 0 à 500 ppm volume de $SO_2$, 500 ppm volume de NO, 520 ppm volume de $NH_3$, 4 % volume d'oxygène, 10 % volume de vapeur d'eau, 10 % volume de $CO_2$, le reste étant de l'azote. Le gaz sortant est analysé à l'aide d'un spectromètre de masse pour déterminer les teneurs en NO, $N_2O$, $NH_3$, $SO_3$.

Les résultats obtenus sont présentés dans le tableau suivant. Ils montrent que les catalyseurs de l'invention (B, C, D, E, F, ) fabriqués à partir d'une mordénite à petits pores, échangée au cuivre utilisés en présence d'une fumée renfermant du $SO_2$, présentent de meilleures performances et une meilleure stabilité dans le temps que le catalyseur A fabriqué à partir d'une mordénite à larges pores. Il en est de même pour le catalyseur G vis à vis du catalyseur H, échangé au fer.

Les essais 4, 14, 17, 20 réalisés en présence d'un gaz ne renfermant pas de $SO_2$, montrent que les catalyseurs élaborés à partir d'une mordénite partiellement désaluminée sont plus performants à basse température que ceux préparés à partir de mordénite non désaluminée.

EXEMPLE 10

On a répété les mêmes essais 1 et 5 avec des mordénites échangées avec Co, Mo, V ou W et les conclusions ont été sensiblement les mêmes.

| Catalyseur | SO₂ (charge) ppm | T °C | Temps heures | Analyse du gaz effluent | | | | Essai |
|---|---|---|---|---|---|---|---|---|
| | | | | NO ppm | N₂O ppm | NH₃ ppm | SO₃ ppm | |
| A M larges | 500 | 330 | 10 | <5 | 20 | 15 | 20 | 1 |
| pores | " | " | 100 | 22 | 25 | 20 | 25 | 2 |
| Cu = 7 % | " | " | 500 | 60 | 30 | 30 | 20 | 3 |
| Si/Al = 5,5 | 0 | 250 | 50 | 40 | <5 | 35 | - | 4 |
| B M petits | 500 | 330 | 10 | 8 | <5 | 15 | <10 | 5 |
| pores | " | " | 90 | 10 | <5 | 20 | <10 | 6 |
| Cu = 6,8 % | " | " | 600 | 12 | <5 | 20 | <10 | 7 |
| Si/Al = 5,5 | | | | | | | | |
| C M petits | 500 | 330 | 10 | <5 | <5 | 8 | <10 | 8 |
| pores | " | " | 95 | <5 | <5 | 12 | <10 | 9 |
| Cu = 7,1 % | " | " | 540 | <5 | <5 | 10 | <10 | 10 |
| Si/Al = 5,5 | | | | | | | | |
| D M petits | 500 | 330 | 10 | <5 | <5 | <5 | <10 | 11 |
| pores | " | " | 100 | <5 | <5 | <5 | <10 | 12 |
| Cu = 5,1 % | " | " | 500 | <5 | <5 | <5 | <10 | 13 |
| Si/Al = 5,5 | 0 | 250 | 50 | 20 | <5 | 25 | - | 14 |
| E M petits | 500 | 330 | 10 | <5 | <5 | <5 | <10 | 15 |
| pores | " | " | 100 | <5 | <5 | <5 | <10 | 16 |
| Cu = 3,1 % | 0 | 250 | 50 | <5 | <5 | <5 | - | 17 |
| Si/Al = 12 | | | | | | | | |
| F M petits | 500 | 330 | 10 | <5 | <5 | <5 | <10 | 18 |
| pores | " | " | 100 | <5 | <5 | <5 | <10 | 19 |
| Cu = 2,9 % | 0 | 250 | 50 | <5 | <5 | <5 | - | 20 |
| Si/Al = 12 | | | | | | | | |
| G M petits | 500 | 330 | 10 | 35 | 10 | 12 | 15 | 21 |
| pores | " | " | 100 | 40 | 12 | 15 | 18 | 22 |
| Fe = 5,3 % | | | | | | | | |
| Si/Al = 5,5 | | | | | | | | |
| H M larges | 500 | 330 | 10 | 40 | 20 | 25 | 22 | 23 |
| pores | " | " | 100 | 80 | 25 | 30 | 25 | 24 |
| Fe : 5,5 % | | | | | | | | |
| Si/Al : 5,5 | | | | | | | | |

## Revendications

1 - Composition catalytique zéolithique, caractérisée en ce qu'elle comprend une mordénite à petits pores échangée avec au moins un métal choisi dans le groupe formé par le cuivre, le vanadium, le tungstène, le fer, le cobalt et le molybdène, la mordénite à petits pores utilisée pour l'échange étant la forme sodique, se présentant sous forme d'aiguilles et ayant la propriété de n'adsorber que des molécules de diamètre cinétique inférieur à $4,4 \times 10^{-10}$ m, ou une forme dérivée.

2 - Composition selon la revendication 1, caractérisée en ce que l'échange est effectué avec du cuivre.

3 - Composition selon la revendication 1 ou 2, caractérisée en ce que la forme dérivée est la forme ammonium.

4 - Composition selon la revendication 1 ou 2, caractérisée en ce que la forme dérivée est la forme protonique.

5 - Composition selon l'une des revendications 1 à 4, renfermant une mordénite dont le rapport atomique Si/Al est de 5 à 100, la teneur en sodium inférieure à 0,2 % en poids, qui possède un volume de maille entre 2,78 et 2,73 $nm^3$, une capacité d'adsorption de benzène supérieure à 5 % en poids et qui se présente en majeure partie sous forme d'aiguilles.

6 - Composition selon l'une des revendications 1 à 5 dans laquelle l'échange est réalisé dans des conditions telles que l'on obtient un taux d'échange de 10 à 100 % de la capacité d'échange de la mordénite et de préférence de 40 à 80%.

7 - Utilisation d'une composition catalytique selon l'une quelconque des revendications 1 à 6 comme catalyseur pour la réduction des oxydes d'azote par l'ammoniac.

8 - Utilisation selon la revendication 7, dans laquelle la proportion d'ammoniac est de 0,8 à 1,4 mole par mole des oxydes d'azote.

9 - Utilisation selon la revendication 7 ou 8, dans laquelle le métal échangé est le cuivre.